# EUROPEAN PATENT SPECIFICATION

(11) **EP 2 188 097 B1**
(45) Date of publication and mention of the grant of the patent: **04.01.2012**
(21) Application number: 08750556.6
(22) Date of filing: 09.05.2008
(51) Int. Cl.: B26D 7/26

(54) **KNIFE HOLDER**
MESSERHALTER
PORTE-COUTEAU

(30) Priority: 10.08.2007 GB 0715630
(43) Date of publication of application: 26.05.2010
(73) Proprietor: Zincometal S.p.A., 20010 Inveruno MI (IT)
(72) Inventor: CHILCOTT, Arthur, George, Market Rasen LN7 6BN (GB); FENNEY, Lee, Lincolnshire LN8 6AA (GB)
(74) Representative: Charig, Raymond Julian
(86) International application number: PCT/GB2008/001618
(87) International publication number: WO 2009/022090

(56) References cited:
- DE-A1- 4 130 799
- JP-A- 2007 038 331

## Description

### Field of the Invention

The invention relates to a knife holder having a knife carrier configured to be moveable through one or more independent degrees of freedom.

### Background

Converting machines are used to convert wide rolls of film, foil, paper or other sheet products into multiple narrower rolls. Typical converted products include cling film, aluminium foil and kitchen towels, but typically all sheet products are converted to some degree. The biggest market for converted products globally is in packaging.

All these products leave the manufacturer in rolls which are generally too big to be used for their final application. For example, paper is typically manufactured in rolls up to 20 metres wide and 1.5 metres diameter. These may have to be reduced in size substantially before they reach the end user. In order to convert such a roll to a smaller size it must be unwound, slit along its length and rewound into several smaller rolls. This is the function of a converting machine, which is sometimes called a web slitting machine.

Knife holders are used in web slitting machines to hold blades which cut material being converted. For example, to convert one large roll in to four smaller rolls requires a bank of five knives, in order to cut all edges. The knife,holders are generally mounted at the top of the converting machine on a mounting rail. Such machines tend to have between twelve and forty-five knives. The knives are oriented and held in position by the knife holders while the material web is passed through the machine.

Existing knife holders currently on the market are typically pneumatically actuated, and may have up to 4 planes of motion: up-down, cant (cutting) angle, sideways (sometimes called "side-load"), and traverse (which sets the relative positions of adjacent knives). The first two motions (up-down and sideways) are controlled by separate actuators; cant is controlled by a mechanical device which requires operator intervention; traverse is a separate electrical system operating to move the knife holders along the mounting rail. Most knives only have the first 3 planes of motion and each plane comes with an increasing cost premium.

Throughout the present specification, the descriptors relating to relative orientation and position, such as "top", "bottom", "horizontal", "vertical", "left", "right", "up", "down", "front", "back", "sideways" as well as any adjective and adverb derivatives thereof, are used in the sense of the orientation as presented in the drawings. However, such descriptors are not intended to be in any way limiting to an intended use of the described or claimed invention.

Existing knife holders all have similar performance limitations, which can include one or more of the following:
- The air-supply system for pneumatic control can be very complex, particularly on machines carrying forty or more knife holders.
- Since all the knife holders on a machine are connected to a common manifold, all operate at the same pressure, so it is not generally possible to provide differential pressure control across the web.
- Knife holders can not be accurately position or force controlled, since pneumatic actuators have "bang-bang" functionality in which moving parts are forced against mechanically preset end-stops.
- Cant angle can not be accurately controlled. The angle can typically be set to one or two positions using a manual key but this is very time consuming and increases downtime. Such manual operations can also be extremely dangerous, with operators making such changes being necessarily in close proximity with a number of very sharp blades along with other parts of the machinery.
- Automated functionality such as knife wear compensation is particularly difficult to incorporate into existing systems. Altering knife actuation parameters to account for wear requires a lot of operator interactions, which can lead to inaccurate cuts and the production of scrap. Additional operator interactions with the machine also increase the risk of accidents occurring.

Most of the problems associated with knives on converting machines are caused by the fact that existing knife ho lders are pneumatically operated.

An object of the invention is therefore to address or overcome one or more of the above mentioned problems.

DE 4130799 discloses a length cutting machine with electric control, with upper blades on an adjustable mounting to move down towards lower blades and to press against the sides of the lower blades, slitting action controlled by the upper blades being moved by an electric drive with controlled movement and the blade pressure monitored by sensors. The upper blades are moved by a single electric motor which couples to vertical and horizontal drives with independent control. The lateral pressure is monitored by tensile strips or by piezo-electric sensors.

### Summary of the Invention

The invention is defined in claims 1, a web slitting machine knife holder, and claim 11, a method of operating a web slitting machine.

In exemplary embodiments of the invention, the problems associated with existing pneumatic systems can be overcome by using low voltage AC or DC servo motors to drive the individual motions. Closed-loop positioning and pressure control through the use of such motors enables knife configuration in individual knife holders to be automatically and remotely altered. This also enables much finer control of slitting parameters than can be typically obtained using pneumatic actuators. Since poor knife setup is a principal cause of scrap, this has significant advantages for machine users, not least in terms of cost savings.

### Brief Description of the Drawings

The invention will now be described by way of example only, with reference to the accompanying drawings in which:
figure 1 illustrates a front perspective view of an exemplary knife holder;
figure 2 illustrates a rear perspective view of the knife holder of figure 1;
figure 3 illustrates a side cutaway perspective view of the movement mechanism of an exemplary knife holder;
figure 4 illustrates a further side cutaway perspective view of the movement mechanism of an exemplary knife holder;
figures 5a and 5b illustrate partial cutaway views of a part of the movement mechanism of an exemplary knife holder;
figures 6a and 6b illustrate further partial cutaway views of a part of the movement mechanism of an exemplary knife holder;
figures 7a and 7b illustrate further partial cutaway views of a part of the movement mechanism of an exemplary knife holder;
figures 8a to 8h illustrate further views of the movement mechanism of figures 6a and 6b;
figure 9 shows a partial perspective view of a series of upper and lower knife blades mounted on a web slitting machine;
figure 10 shows an exemplary knife carrier having a rotational sensor;
figure 11 shows an exploded view of a knife holder side-load mechanism; and
figure 12 shows a control block diagram for a side-load controller.

### Detailed Description

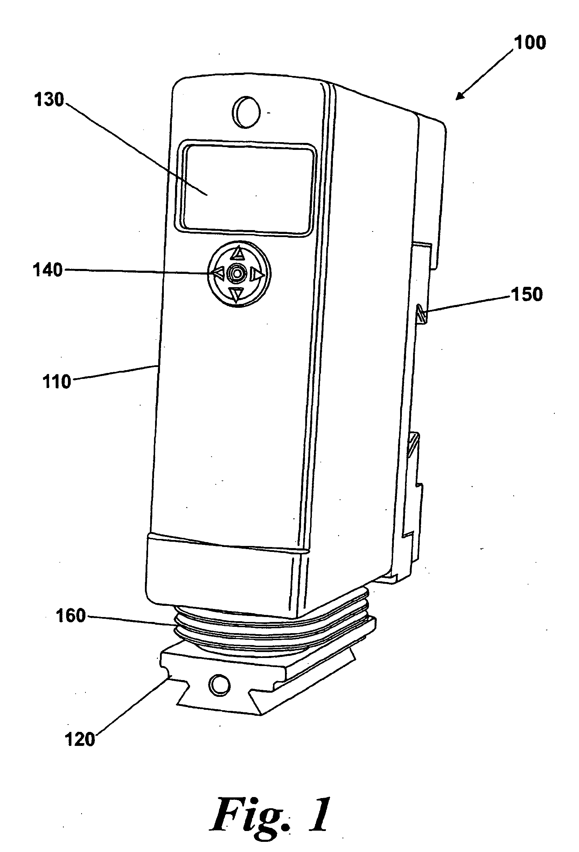

An exemplary knife holder 100 is illustrated in figure 1, showing a front view of the knife holder 100. The outer housing 110 of the knife holder 100 includes a display 130 for indicating various operating parameters of the knife holder 100. These may include for example a unit designation number, an indication of knife orientation such as vertical position (or depth), sideways position and cant angle, and an indication of calculated pressure on the knife carrier 120. Each of the operating parameters can be obtained from feedback from motors in the knife holder 100, or alternatively from additional sensor elements incorporated into the knife holder 100. User controls 140 can also be included on the outer housing 110, for example to adjust the readings available on the display 130 or to set and reset various parameters.

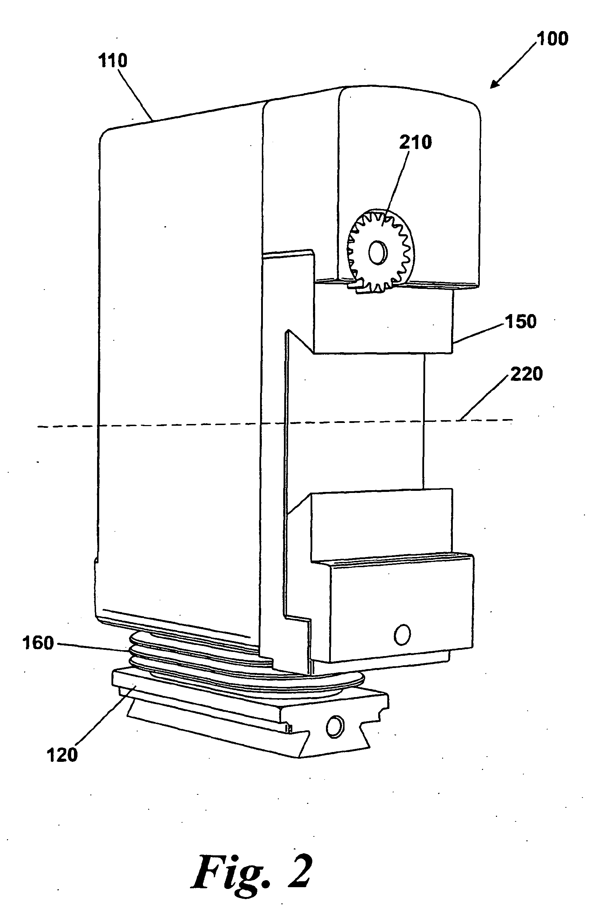

The knife holder 100 comprises a rail mount 150 configured to be mounted on to a guide rail of a roll conversion machine. The rail mount 150 is more clearly shown in figure 2, which shows a perspective view from the rear of the knife holder 100 of figure 1. The rail mount 150 consists, in this case, of a dovetail formation adapted to be slidably mounted on a correspondingly shaped guide rail so that the knife holder can be traversed along an axis 220 defined by the rail, designated throughout as the first axis 220. A traverse pinion 210, driven by a servo motor (not shown) inside the outer housing 110 of the knife holder 100 can be provided to allow the knife holder 100 to be independently moveable along the rail. The traverse pinion 210 is configured to engage with a corresponding rack on the rail so that rotation of the pinion 210 causes linear motion of the knife holder along the first axis 220 defined by the rail.

A flexible cover 160 can be provided between the knife carrier 120 and the outer housing 110 of the knife holder, the flexible cover 160 allowing for movement of the knife carrier 120 relative to the outer housing 110 and preventing ingress of dirt and debris, so as to protect the internal workings of the knife holder 100.

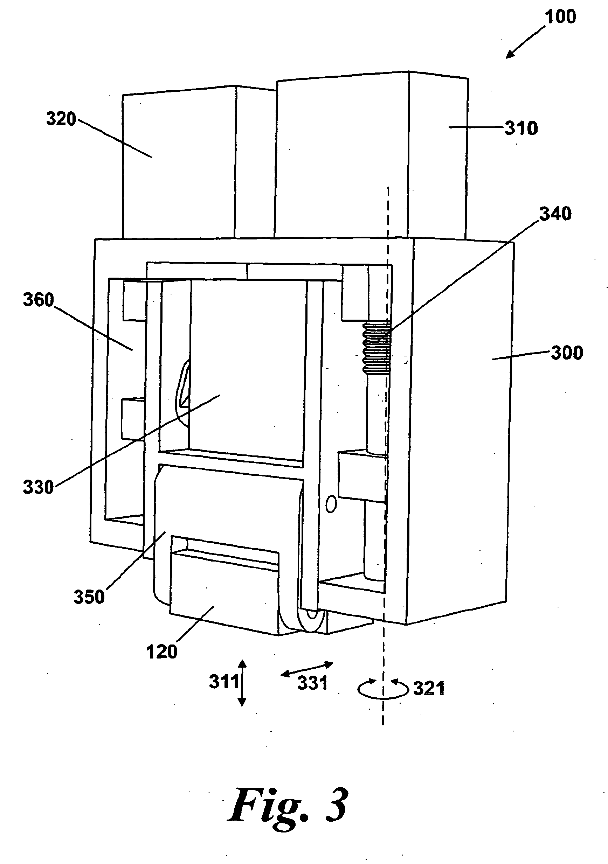

Illustrated in figure 3 is a cutaway perspective view of an exemplary knife holder 100, with the outer housing 110 and flexible cover 160 removed. A frame 300 connects various parts of the knife holder 100 together. Secured to the frame 300 is a first (or up-down) motor 310 for control of vertical or up-down motion (indicated by arrow 311), a second (or cant angle) motor 320 for control of cant angle (the rotation for altering the cant angle indicated by arrow 321) and a third (or sideways) motor 330 for control of sideways motion (indicated by arrow 331). The knife carrier 120 is thereby able to move relative to the frame 300 independently in each of three degrees of freedom, being in this case two degrees of translation 311, 331 and one of rotation 321. A fourth (or traverse) motor (not shown) may also be included for control of translation of the knife holder 100 along the first axis via rotation of the pinion 210 shown in figure 2.

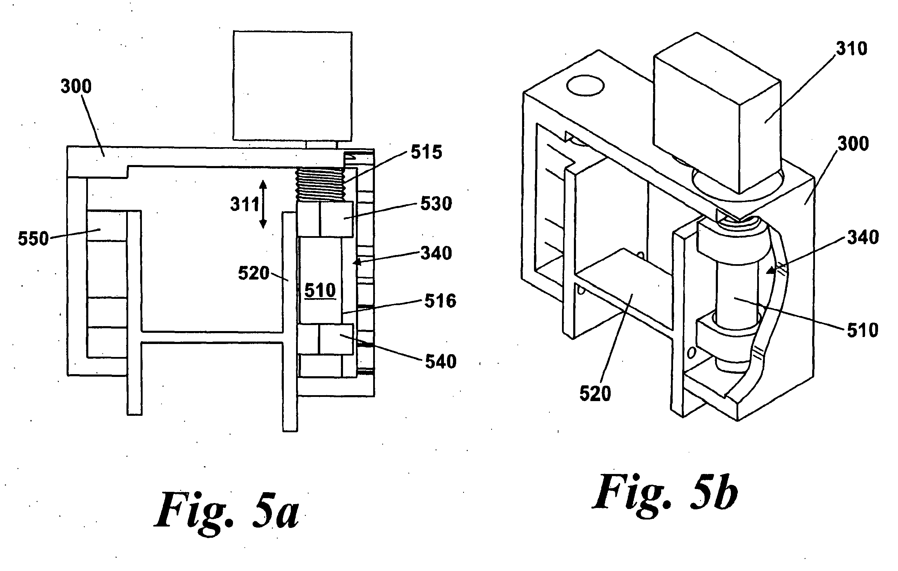

Vertical translation of the knife carrier 120 relative to the frame 300 is achieved through a vertical translation mechanism 340, actuated by the first motor 310. The cant angle is adjusted by means of a cant angle mechanism 360, actuated by the second motor 320. Sideways translation is achieved by means of the sideways mechanism 350, actuated by the sideways drive motor 330. Further details of these mechanisms are provided below, with reference to figures 5 to 7.

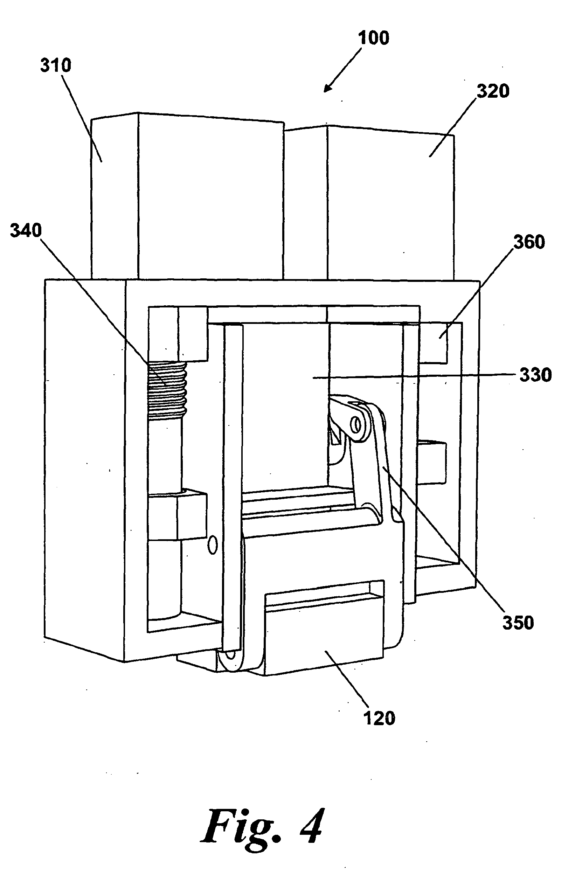

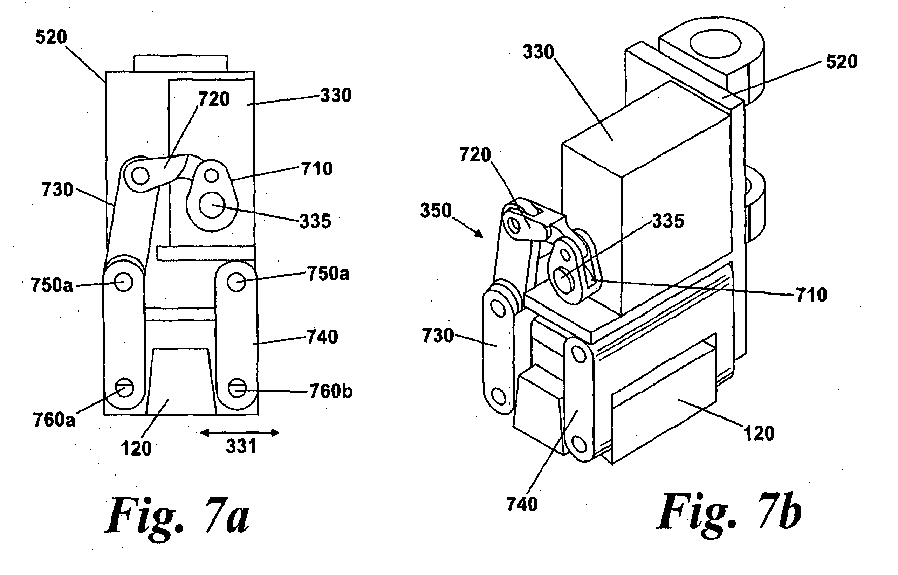

Figure 4 shows an alternative cutaway perspective view of the knife holder shown in figure 3. In this view, the sideways drive mechanism 350 is more clearly visible, details of which are described below with reference to figure 7.

Figures 5a and 5b illustrate in more detail the vertical translation mechanism 340. The mechanism 340 comprises two mounting eyes 530, 540 connected to the side motion carrier frame 520, and a screw 510 connected to the first servo motor 310. The mounting eyes 530, 540 allow the carrier frame 520 to move vertically in the direction 311 relative to the frame 300. A first mounting eye 530 comprises a threaded internal surface engaging with a threaded portion 515 of the screw 510, so that rotation of the screw 510 by the servo motor 310 causes the first mounting eye to move along the screw 510. The second mounting eye 540 is preferably unthreaded, and serves to guide the motion of the carrier frame 520 along the screw 510 as it slides on an unthreaded portion 516 of the screw 510. The screw 510 is rotatably mounted at either end in the frame 300, and engages at its upper end with the output of the servo motor 310. The vertical movement mechanism 340 thereby allows for linear movement of the carrier frame 520, on which the knife carrier 120 is mounted, relative to the frame 300 along a second axis 311 substantially orthogonal to the first axis 220 by actuation of the first electric motor 310.

The carrier frame 520 is prevented from rotating about the screw by means of a slidable mount 550, which may incorporate or be linked with the cant angle mechanism 360, further detailed below.

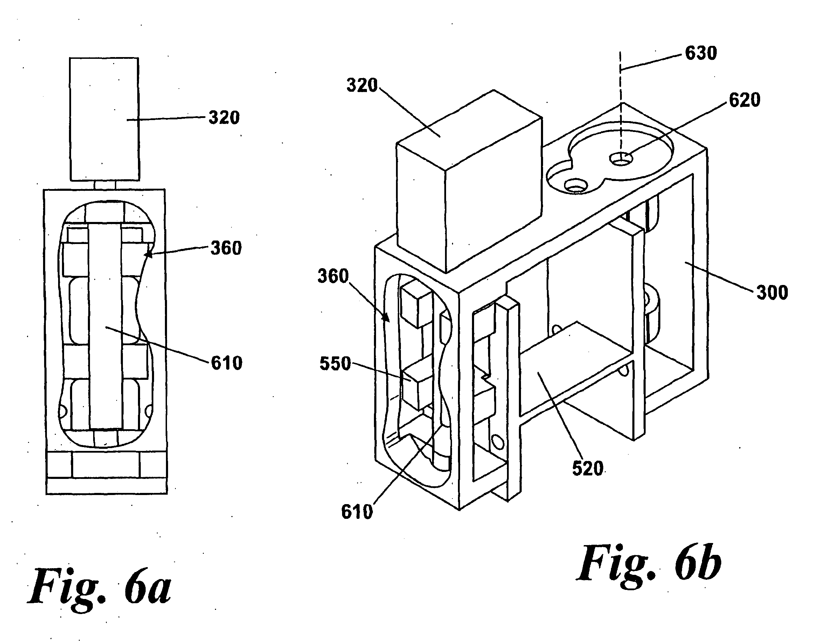

Figures 6a and 6b show further cutaway views of the knife holder 300, and in particular a more detailed view of the cant angle mechanism 360. The cant angle mechanism 360 comprises a cam 610 rotatably actuatable by the second servo motor 320 mounted on the frame 300. The cam 610 is preferably of a non-circular cylindrical cross-section, such that when rotated by actuation of the motor 320 the slidable mount 550 is caused to move laterally and rotate the carrier frame about a pivot point 620. The pivot point 620 is preferably coincident with the axis 630 along which the carrier frame is actuated by the vertical translation mechanism 340. The cant angle mechanism 360 thereby allows for rotation of the knife carrier 120, connected to the carrier frame 520, relative to the knife holder frame 300 about a second axis 630 substantially orthogonal to the first axis 220 (figure 2) by actuation of a second electric motor 320.

Shown in figures 7a and 7b are further cutaway views of the knife holder 100, in particular illustrating the sideways movement mechanism 350, actuated by the third electric motor 330. The motor 330 is mounted on the carrier frame 520, and an output 335 from the motor 330 is connected to an actuating link 730 by a crank 710 and a connecting link 720. The crank 710 and connecting link 720 are rotatably connected to each other, to the motor 330 and to actuating link, such that rotation of the output 335 of the motor 330 causes the actuating link 730 to rotate about a pivot point 750a, and thereby cause the knife carrier 120 to translate in a sideways direction 331 relative to the carrier frame 520. An advantage of this arrangement is that rotation of the output of the motor 330 causes a smaller rotation of the actuating link 730 about the pivot point 750a, allowing for fine control of sideways motion of the knife carrier 120. The arrangement also allows for the movement mechanism 350 to be more compact, fitting all the components of the movement mechanism 350 within the width of the knife carrier 120, and allows the motor 330 to be positioned within the carrier frame 520 to further optimise use of space within the knife holder 100.

Rotation of the actuating link 730 causes a parallel link 740, connected via the knife carrier 120 and frame 300, to rotate synchronously with the actuating link 730, and causes the knife carrier 120 to move sideways. The actuating link between pivot points 750a and 760a is preferably parallel to the parallel link 740, mounted between pivot points 750b and 760b, to prevent rotation of the knife carrier 120 when the sideways translation mechanism 350 is actuated. The sideways translation mechanism 350 thereby allows for linear movement of the knife carrier 120 relative to the frame 300 in a direction 331 substantially parallel to the first axis 220 by actuation of the third motor 330.

Any small vertical translation of the knife carrier 120 caused by rotation of the links 730, 740 during actuation of the sideways translation mechanism 350 can be compensated for by actuation of the vertical translation mechanism 340:

Further to the motors 310, 320, 330 for controlling motion of the knife carrier 120 relative to the frame 300, the knife holder 100 can also incorporate a fourth electric motor configured to drive the knife holder along the mounting rail of the slitting machine, i.e. along the first axis. The fourth motor is preferably connected to a pinion gear 210 (figure 2), so as to directly drive the knife holder 100 along a corresponding rack on the mounting rail.

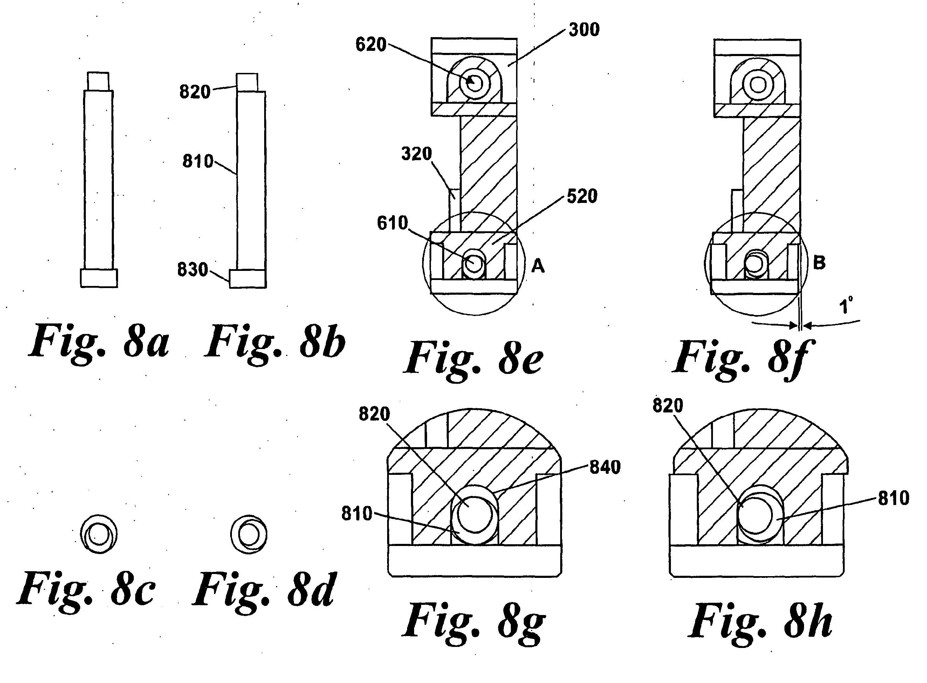

Figures 8a to 8h further illustrate the exemplary cant angle mechanism 360 shown in figures 6a and 6b. The cam 610 comprises concentric circular end portions 820, 830, and a central circular cam portion 810. The centre of the circular cam portion 810 is offset from the central axis of the cam, as defined by the pivot point 620 and axis 630 (figure 6b).

Figures 8a and 8c show the cam 610 in elevation and plan view respectively, when the cam 610 is in the centre position, which corresponds to a zero cant angle. Figures 8b and 8d show the cam 610 when rotated 90° from this position, which corresponds to a maximum cant angle (or full cant) position. These configurations are further detailed in the views in figures 8e and 8g for the centre position, and in figures 8f and 8h for the full cant position. Rotation of the cam 610 about the centre position towards either maximum position, i.e. through +/- 90°, thereby causes the carrier frame 520 to rotate about the pivot point 620 by a smaller angle. This angle of cant angle rotation may, for example, be around +/- 1°, as shown in figure 8f.

The cant angle mechanism 360 is preferably configured such that the circular cam portion 810 is rotatable within a corresponding groove 840 in the carrier frame 520. Preferably, the groove 840 is a close sliding fit to the cam portion 810, so that any backlash in the cant angle mechanism is minimised. A further advantage of this arrangement is that a biased return mechanism is not necessarily required, and the carrier frame 520 remains consistently rigid about the pivot point 620 regardless of the set cant angle.

A knife holder 100 according to the invention differs from existing models in that the knife holder 100 incorporates electric motors 310, 320, 330 to drive each individual motion. The electric motors are preferably servo-controlled electric motors, for example low-voltage AC servo motors. Some or all of the electric motors and associated drive electronics are preferably embedded inside the knife holder's outer housing 110, thereby providing a very compact structure. In one optional embodiment, four servo motors configured to respectively control movement of the knife carrier in each of the independent degrees of freedom described herein are arranged around the frame 300 of the knife holder 100, all of the motors being encased within the outer housing 110.

The use of servo motors enables the zeroth, first and second order dynamics (position, velocity and acceleration) of the motion of each motor to be accurately and individually controlled. The motions do not require end-stops or manual setup between production runs.

An advantageous feature of certain embodiments of the invention is that each motion can be controlled in a closed-loop system. Information about the dynamics of the motions is available in real-time from analysis of the drive characteristics of each motor, which allows a controller to compensate for deviations in performance. This information can also be used to diagnose the performance of the web.

The use of feedback enables automatic and remote control of each knife holder 100. This provides advantages in terms of significant down-time reductions, the ability to employ a recipe-based setup, and increases safety through the elimination of manual adjustment of the knives.

Feedback control could also be used for compensation of the complete roll conversion machine. As an example, a row of 20 conventional pneumatic knife holders connected to a common manifold creates a significant down pressure on the anvil shaft of the machine, causing it to bend. This bending affects the quality of the shear across the web, since the web is then inconsistently stretched across the machine. By employing servo control of the up-down axes, these motions can be controlled in position mode (zeroth order) instead of force mode (second order), so the knives do not exert pressure on the anvil shaft, thus reducing the bending effect. During setup, feedback from the knife holders can be used to automatically detect the positions of each anvil. This information can be used to provide even knife pressure across the whole web.

The above approach is not the same as classical feedback control, which focuses on the dynamics of the particular motion being controlled. Nor is it classical multi-variable control, since the dynamics of the individual axes are not coupled. The approach is instead an intelligent application of expert compensators and multi-variable feedback control to provide a new benefit, i.e. an improvement in the performance of the process of roll conversion.

The above approach may be extended to provide automatic predictive compensation and maintenance of the process of roll conversion, where a closed-loop control system utilises real-time feedback information about the dynamics of each knife holder motion. This information can be used to sense the dynamics of the material being processed. An "Expert System" can then be defined to control the setpoints of each motion to provide compensation for the process. The "predictive compensation" aspect comes from detecting changes and trends in the performance of the process, employing the Expert System to identify the cause of those trends and predict their effect, then adjusting the machine setpoints to compensate for these effects. The "predictive maintenance" aspect comes from identifying when those trends are caused by deviations in the performance of one or more machine elements, then recommending via the operator-interface that those faulty elements be adjusted or replaced.

Servomotors suitable for use with the knife holders of the invention are different from traditional industrial servo motors, which tend to be bulky. Preferably, the motors used are those commonly used in remote control applications, due to their compact shape and controllability. Such motors tend also to be used in micro-robotic applications. Exemplary motors can be found at www.servocity.com. The advantages of such motors are that they are an integrated design, generally incorporating a servo motor and servo controller, which makes them easy and low-cost to incorporate. This consequently makes the knife holder simpler and of lower cost.

In use, knives mounted onto the knife holders are in contact with the web being slit by the machine. As the web passes over the knives it exerts a force on them. This force can be detected as movements in the position sensors and fluctuations in the current waveform of the servos as they compensate for the disturbance. Combining the set of information from all the knives distributed across the web enables interpretation of, and compensation for, the condition of the web. For example, monitoring side-load fluctuations on each knife enables detection of the distribution of tension across the web, which can be compensated for by controlling the tension of the unwind and rewind motors on the web slitting machine. Such compensation may be made automatically.

Optionally mounting a position sensor such as an optical sensor on the bottom of the knife holder frame 300 allows for detection of the position of the top surface of the knife when the knife carrier 120 is moved up and down. Since the knife is generally circular, this leads to a calculation of its diameter, which provides an indication of the amount the blade has worn. Such an indication may be obtained by means of a optical sensor of a type such as a registration sensor commonly used in the food packaging industry. A registration sensor mounted on the knife holder 100, for example on the knife carrier 120, may be configured to monitor an edge of a rotary knife attached to the knife carrier 120. Indications of movement of this edge will thereby provide an indication of knife wear.

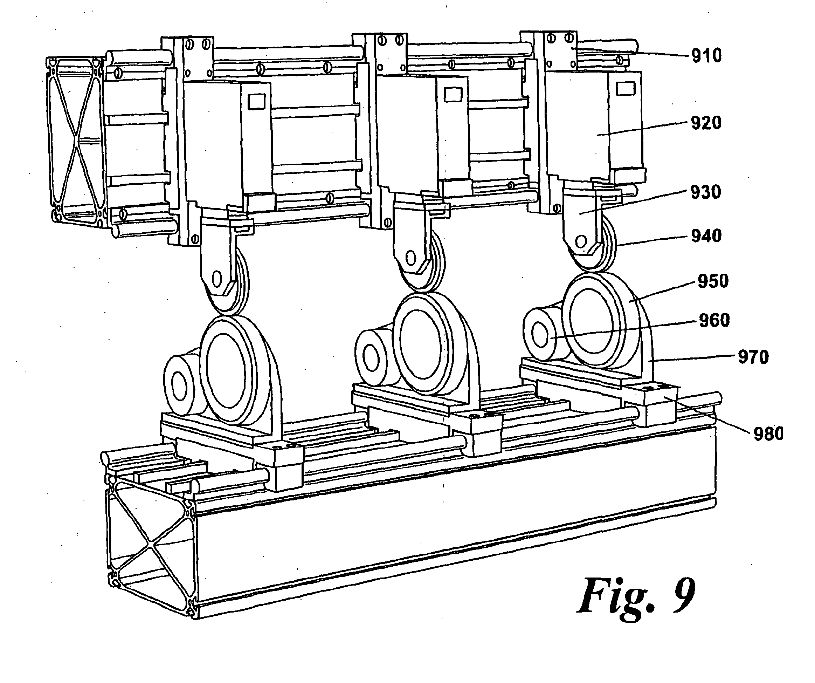

A typical web slitting knife system having three upper knives 940 and three corresponding lower knives 950 is illustrated in figure 9. The lower knives 950 are each mounted on a knife holder 970 and traverse unit 980, the lower knives being driven by a servo motor 960 via a belt drive. The lower knives 950 are speed-controlled to synchronise their rotation with material passing over them and between the upper and lower knives.

The upper knife blades are not independently driven, and are freely rotatable on their respective carriers. Instead, the upper knife holders 920 position the knife cartridges 930 (including the knife blade and carrier) so the upper knife blade outer rims overlap those of the lower knives 950. The upper knives are pushed sideways under force control by the lower knives so that the upper and lower knives press against each other. This provides a friction drive between the upper and lower knife blades, which propels the upper knives at approximately the same circumferential speed as the lower knives. The depth of overlap between the upper and lower knives is critical to operation of the web slitting machine, because accurate speed control of each upper knife's cutting edge is only obtained with the correct amount of overlap.

The amount of side force required to achieve this friction drive is generally in the region of 15 to 20N. However, if the material being slit is very heavy or has an adhesive coating, larger forces may be required. If the force applied is below that required, the upper knife can slip, causing material to tear due to the differential speed which arises between the knife blade and the material.

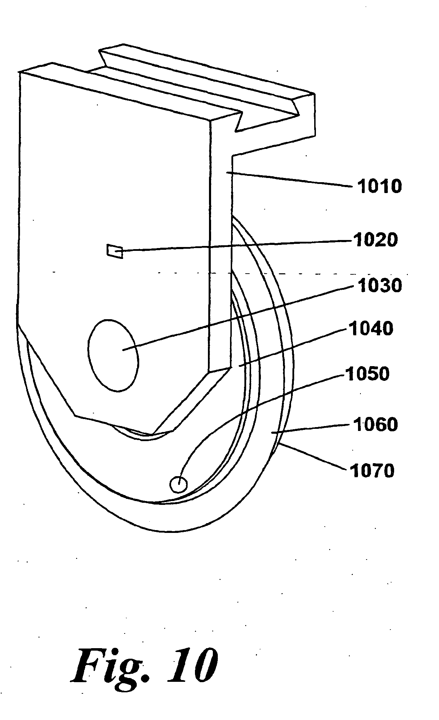

The upper knife holder 920 can be configured to measure the speed and position of the upper knife by using a rotation sensor, shown by example in figure 10. The sensor comprises a proximity sensor 1020 is mounted on the knife carrier 1010 and a magnet 1050 mounted on the knife hub 1040. The knife carrier 1010 may be considered to be the second part of the knife carrier as described above in relation to figures 1-4, the knife carrier 120 of figures 1-4 being considered the first part that is connected to the frame by the movement mechanism. The second part 1010 of the knife carrier is connected to the first part 120 and has the knife blade 1060 rotatably mounted thereon.

The hub 1050 rotates with the knife blade 1060, which is secured to the hub 1050 by means of a hub nut 1070. The hub 1040, knife blade 1060 and hub nut 1070 are all mounted on a spindle 1030 for rotation. A sensor, for example comprising a magnet 1050 and an associated proximity sensor, is used to sense rotation of the knife blade 1060. The magnet 1050 is preferably mounted on the knife blade 1050, while the sensor 1020 is mounted on the knife carrier 1010. The magnet 1050 passes the proximity sensor 1020 once per revolution, allowing the rotational speed of the knife blade 1060 to be calculated using a microprocessor controller. This measurement could also be made using an encoder, resolver or tachometer, but each of these would add cost and are therefore less preferable (although still feasible) embodiments. Since the lower knife rotational speed and position is already known from the encoder or resolver built into its drive motor 960 (figure 9), measuring the upper knife's rotational speed allows for the detection of slippage between the upper and lower knife blades.

If slippage is detected, the side-force applied to the upper knife blade can be automatically increased until slippage stops. This process may be termed Adaptive Slippage Compensation (ASC). An alternative type of ASC involves starting with a large side-force and gradually decreasing this until slippage commences, then increasing the force slightly to be greater than a given threshold value. Since high side forces will tend to increase wear of the knife blade, running the knives at a side force only slightly greater than the threshold force provides a more optimum setting for both eliminating slippage and maximising the wear life of the knife blades.

In a general aspect, the above method comprises measuring a rotational speed between a first rotatably mounted knife blade on a web slitting machine knife holder, comparing the rotational speed with that of a second rotatably mounted knife blade laterally adjacent the first knife blade and adjusting a side load between the first and second knife blades to reduce a difference between the rotational speeds.

The ability to identify a threshold value for slippage on each knife allows for a comparison of threshold forces across the web and the detection of longitudinal tension patterns in the material as it passes through the machine (since different materials have different tension patterns across the grain of the material). This information can then be used to control the rewind and unwind sections of the machine more accurately to provide even tension across the web.

A further advantage of being able to record the rotational speed of the knife blade is that of allowing for predictive maintenance by feeding the available information into predictive maintenance software. Since most knife blades have a pre-defined wear life, the software can flag when knife blade is approaching the end of its expected wear life and feed this into a regular maintenance schedule.

In a general aspect, the web slitting machine knife holder as described above comprises a knife carrier on which a knife blade is rotatably mounted, the knife carrier comprising a sensor configured to sense a rotational speed of the knife blade. The sensor may comprise a proximity sensor mounted on the knife carrier and a magnet affixed to the knife blade. This aspect may be combined with other aspects and features disclosed herein to the extent compatible.

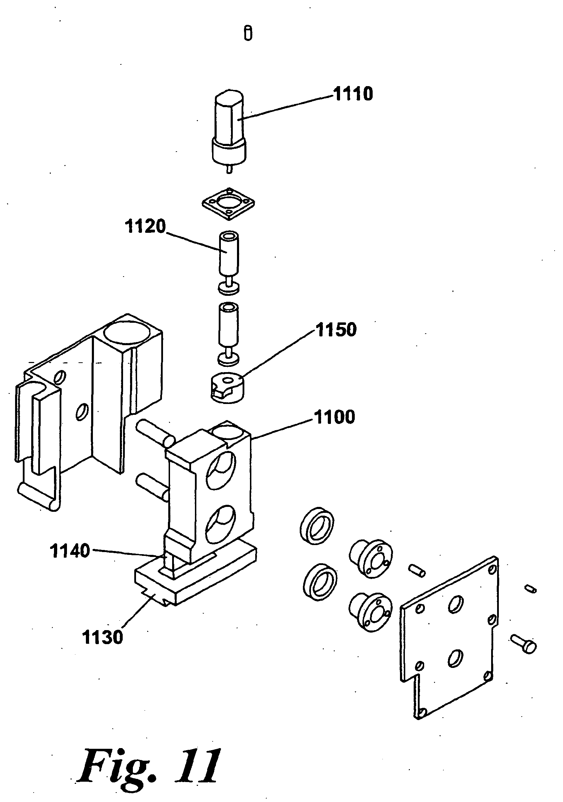

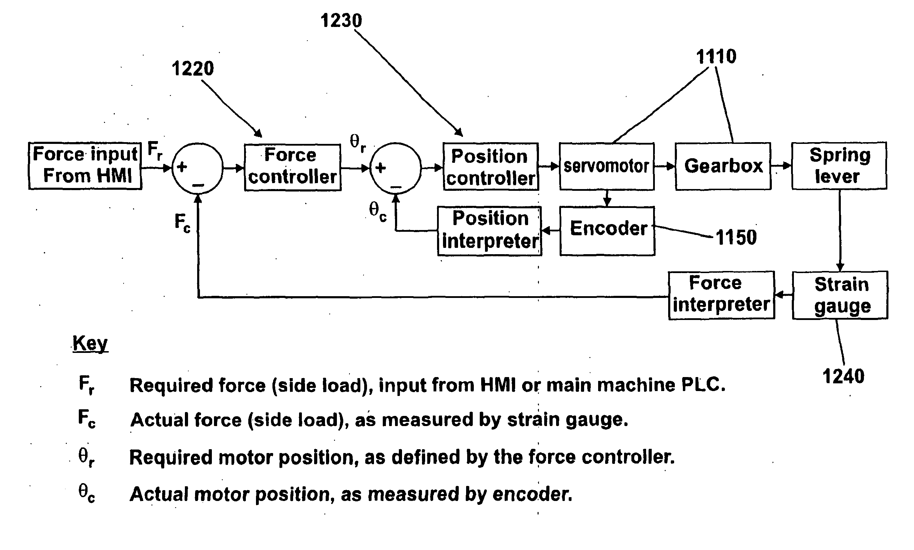

A strain gauge may be added to the side-load mechanism to provide a high-resolution reading of the side-force on the upper knife blade. An exemplary arrangement of a side-load mechanism in exploded form is shown in figure 11.

The side-load mechanism 1100 is driven by a geared servo motor 1110 and a worm drive 1120. Rotating the motor 1110 causes the mechanism 1100 to move sideways. When the upper knife (attached to the knife carrier 1130) comes into contact with the lower knife, the sideways force causes a beam 1140 of the side load mechanism 1100 to deflect. This deflection can be detected by means of a strain gauge mounted on the beam 1140. Further rotating the motor 1110 in the same direction increases this detected side-force. Reversing the motor 1110 reduces the side-force. As a result, controlling the position of the motor 1110 (e.g. by means of a rotary encoder 1150) enables control of the side-force applied to a knife mounted on the knife carrier 1130.

In a general aspect, the above-described web slitting machine knife holder comprises a side load mechanism for moving a knife carrier attached thereto, the side load mechanism comprising a servomotor configured to move the knife carrier in the direction of a side load and a strain gauge attached to the mechanism for measuring the side load. This aspect may be combined with other aspects and features disclosed herein to the extent compatible.

Figure 12 illustrates how the side-load can be controlled using a classical feedback configuration, in which the difference between the required force Fᵣ and actual side-force F_{c} is fed into a proportional control algorithm, whose gain scaling is used to convert this into the required position θᵣ of the servo mechanism. An encoder 1150 on the worm gear 1120 (figure 11) is used to feed back the actual position θ_{c} of the motor 1110. A proportional position controller 1230 is then used to drive the servo motor 1110 into the correct position to produce the required side-force Fᵣ. The actual force F_{c} is measured by the strain gauge 1240 on the side-load mechanism 1100. Since the sideways motion is driven via a self-locking worm drive 1120, the motor 1110 can be de-energised when the actual force F_{c} is equal to the required force Fᵣ. De-energising the motor 1110 serves to reduce motor heat and power during operation.

The above described method of force control, in a general aspect, therefore comprises automatically adjusting a force exerted on the knife carrier by controlling movement of the knife carrier relative to the frame, the force preferably being detected by a strain gauge.

In a general aspect, the above method of controlling a side load on a web slitting machine knife carrier comprises measuring the side load and position of a side load servo motor, and driving the servo motor until a required side load is obtained. The method preferably involves the use of a proportional control algorithm in which the required side load is converted into a required position for the servo motor.

Other embodiments are intended to be within the scope of the invention as defined by the following claims.

## Claims

1. A web slitting machine knife holder (100) configured to be mounted on a rail for linear movement of the knife holder along a first axis, the knife holder comprising:
a frame (300);
a knife carrier (120) connected to the frame by a movement mechanism (340, 350, 360); and
a plurality of electric motors (310, 320, 330) connected to the movement mechanism,
wherein the knife carrier is moveable relative to the frame through three independent degrees of freedom by operation of the movement mechanism through actuation of a respective one of the plurality of electric motors,
and wherein the movement mechanism (340, 350, 360) allows for rotation of the knife carrier (120) relative to the frame (300) about a second axis orthogonal to the first axis by actuation of a second one (320) of the plurality of electric motors.

2. The knife holder (100) according to claim 1 wherein the movement mechanism (340, 350, 360) allows for linear movement of the knife carrier (120) relative to the frame (300) along a second axis substantially orthogonal to the first axis by actuation of a first one (310) of the plurality of electric motors, the movement mechanism optionally comprising a screw (340) defining the second axis, wherein rotation of the screw through actuation of the first motor causes linear movement of the knife carrier relative to the frame.

3. The knife holder (100) according to claim 1 wherein the movement mechanism comprises a rotatable cam (610), wherein rotation of the cam through actuation of the second motor causes rotation of the knife carrier relative to the frame.

4. The knife holder (100) according to claim 3 wherein the movement mechanism (340, 350, 360) allows for linear movement of the knife carrier (120) relative to the frame (300) along the second axis by actuation of a first one (310) of the plurality of electric motors.

5. The knife holder (100) according to any preceding claim wherein the movement mechanism (340, 350, 360) allows for linear movement of the knife carrier (120) relative to the frame (300) in a direction substantially parallel to the first axis by actuation of a third one (330) of the plurality of electric motors, the movement mechanism optionally comprising a pair of rotatable links (730, 740) connected to the third one (330) of the plurality of electric motors such that actuation of the third motor causes the knife carrier to move along the direction substantially parallel to the first axis through synchronous rotation of the pair of rotatable links, the pair of links being optionally arranged in a substantially parallel formation.

6. The knife holder (100) according to any preceding claim comprising a fourth one of the plurality of electric motors configured to drive the knife holder along the first axis.

7. The knife holder (100) according to claim 1 wherein the plurality of electric motors (310, 320, 330) are servo-controllable electric motors.

8. The knife holder (100) according to any preceding claim comprising an outer housing (110) enclosing the frame, movement mechanism and the plurality of electric motors, the outer housing optionally comprising a display (130) configured to indicate operating parameters of the knife holder.

9. The knife holder (100) according to claim 1 wherein the knife carrier (120) comprises a sensor configured to sense rotation of a knife blade rotatably mounted on the knife carrier for determining a rotational speed of the knife blade, the sensor optionally comprising a magnetic proximity sensor mounted on the knife carrier and a magnet mounted on the knife blade.

10. The knife holder (100) according to claim 1 comprising a strain gauge mounted on the knife carrier and configured to detect a lateral force exerted on the knife carrier.

11. A method of operating a web slitting machine comprising;
electrically controlling a plurality of electric motors (310, 320, 330) in each of a plurality of knife holders (100), the knife holders being attached to a mounting rail of the web slitting machine for linear movement along a first axis,
wherein each knife holder (100) comprises a frame (300) and a knife carrier (120) connected to the frame by a movement mechanism (340, 350, 360), **characterised by** the plurality of electric motors being connected to the movement mechanism to move the knife carrier relative to the frame through three independent degrees of freedom by operation of the movement mechanism through electrically controlling the plurality of electric motors
wherein the movement mechanism (340, 350, 360) rotates the knife carrier (120) relative to the frame (300) about a second axis orthogonal to the first axis by actuation of a second one (320) of the plurality of electric motors.

12. The method of claim 11 comprising detecting a force exerted on a knife carrier from one or more of the plurality of electric motors (310, 320, 330).

13. The method of claim 11 or claim 12 comprising automatically adjusting operating parameters of the web slitting machine in response to feedback provided from one or more of the plurality of electric motors (310, 320, 330), wherein automatically adjusting operating parameters optionally comprises adjusting a tension in a web passing through the web slitting machine.

14. The method of claim 13 comprising automatically adjusting the force exerted on the knife carrier (120) by controlling movement of the knife carrier relative to the frame, (300) wherein the force is optionally detected by a strain gauge mounted on the knife carrier.

## Patentansprüche

1. Messerhalter (100) für eine Bahnlängsschneidemaschine, der konfiguriert ist, an einer Schiene für eine lineare Bewegung entlang einer ersten Achse angebracht zu sein, wobei der Messerhalter folgendes umfasst:
einen Rahmen (300);
einen Messerträger (120), der mit dem Rahmen durch einen Bewegungsmechanismus (340, 350, 360) verbunden ist; und
eine Vielzahl von Elektromotoren (310, 320, 330), die mit dem Bewegungsmechanismus verbunden sind,
wobei der Messerträger relativ zum Rahmen über drei unabhängige Freiheitsgrade durch Betrieb des Bewegungsmechanismus über Betätigen eines entsprechenden der Vielzahl von Elektromotoren beweglich ist,
und wobei der Bewegungsmechanismus (340, 350, 360) eine Drehung des Messerträgers (120) relativ zu dem Rahmen (300) um eine zur ersten Achse orthogonalen zweite Achse durch Betätigen des zweiten (320) der Vielzahl von Elektromotoren ermöglicht.

2. Messerhalter (100) nach Anspruch 1, wobei der Bewegungsmechanismus (340, 350, 360) eine lineare Bewegung des Messerträgers (120) relativ zu dem Rahmen (300) entlang einer zweiten Achse, die im Wesentlichen orthogonal zu der ersten Achse orientiert ist, durch Betätigen des ersten (310) der Vielzahl der Elektromotoren ermöglicht, wobei der Bewegungsmechanismus optional eine Schraube (340) umfasst, die die zweite Achse definiert, wobei eine Drehung der Schraube durch Betätigen des ersten Motors eine lineare Bewegung des Messerträgers relativ zu dem Rahmen bewirkt.

3. Messerhalter (100) nach Anspruch 1, wobei der Bewegungsmechanismus einen drehbaren Nocken (610) umfasst, wobei eine Drehung des Nockens durch Betätigen des zweiten Motors eine Drehung des Messerträgers relativ zu dem Rahmen bewirkt.

4. Messerhalter (100) nach Anspruch 3, wobei der Bewegungsmechanismus (340, 350, 360) eine lineare Bewegung des Messerträgers (120) relativ zu dem Rahmen (300) entlang der zweiten Achse durch Betätigen des ersten (310) der Vielzahl der Elektromotoren ermöglicht.

5. Messerhalter (100) nach einem der vorangehenden Ansprüche, wobei der Bewegungsmechanismus (340, 350, 360) eine lineare Bewegung des Messerträgers (120) relativ zu dem Rahmen (300) in einer im Wesentlichen parallel zu der ersten Achse orientierten Richtung durch Betätigen des dritten (330) der Vielzahl der Elektromotoren ermöglicht, wobei der Bewegungsmechanismus optional ein Paar von drehbaren Kuppelstücken (730, 740) umfasst, die mit dem dritten (330) der Vielzahl der Elektromotoren so verbunden sind, dass ein Betätigen des dritten Motors bewirkt, dass sich der Messerträger entlang der im Wesentlichen parallel zu ersten Achse orientierten Richtung durch synchrones Drehen des Paares der drehbaren Kuppelstücke bewegt, wobei das Paar der Kuppelstücke optional in einer parallelen Formation angeordnet ist.

6. Messerhalter (100) nach einem der vorangehenden Ansprüche, ferner umfassend einen vierten der Vielzahl von Elektromotoren, der konfiguriert ist zum Antreiben des Messerhalters entlang der ersten Achse.

7. Messerhalter (100) nach Anspruch 1, wobei die Vielzahl von Elektromotoren (310, 320, 330) servosteuerbare Elektromotoren sind.

8. Messerhalter (100) nach einem der vorangehenden Ansprüche, ferner umfassend ein Außengehäuse (110), das den Rahmen, den Bewegungsmechanismus und die Vielzahl der Elektromotoren umgibt, wobei das Außengehäuse optional eine Anzeigeeinrichtung (130) umfasst, die zum Anzeigen von Betriebsparametern des Messerhalters konfiguriert ist.

9. Messerhalter (100) nach Anspruch 1, wobei der Messerträger einen Sensor umfasst, der zum Erkennen einer Drehung einer Messerschneide konfiguriert ist, die drehbar am Messerträger angebracht ist, um eine Drehgeschwindigkeit der Messerschneide zu bestimmen, wobei der Sensor optional einen am Messerträger angebrachten magnetischen Annäherungssensor und einen an der Messerschneide angebrachten Magneten umfasst.

10. Messerhalter (100) nach Anspruch 1, ferner umfassend einen Dehnungsmesser, der an dem Messerträger angebracht und zum Detektieren einer auf den Messerträger ausgeübten lateralen Kraft konfiguriert ist.

11. Verfahren zum Betreiben einer Bahnlängsschneidemaschine, umfassend:
elektrisches Steuern einer Vielzahl von Elektromotoren (310, 320, 330) in jedem einer Vielzahl von Messerhaltern (100), wobei die Messerhalter an einer Befestigungsschiene der Bahnlängsschneidemaschine für eine lineare Bewegung entlang einer ersten Achse angebracht sind,
wobei jeder Messerhalter (100) einen Rahmen (300) und einen Messerträger (120) umfasst, der mit dem Rahmen durch einen Bewegungsmechanismus (340, 350, 360) verbunden ist, **gekennzeichnet durch** die Vielzahl von Elektromotoren, die mit dem Bewegungsmechanismus zum Bewegen des Messerträgers relativ zu dem Rahmen über drei unabhängige Freiheitsgrade **durch** Betrieb des Bewegungsmechanismus über elektrisches Steuern der Vielzahl von Elektromotoren verbunden sind,
wobei der Bewegungsmechanismus (340, 350, 360) den Messerträger (120) relativ zu dem Rahmen (300) um eine zur ersten Achse orthogonalen zweite Achse **durch** Betätigen des zweiten (320) der Vielzahl von Elektromotoren dreht.

12. Verfahren nach Anspruch 11, ferner umfassend Detektieren einer durch einen oder mehrere der Vielzahl von Elektromotoren (310, 320, 330) auf einen Messerträger ausgeübten Kraft.

13. Verfahren nach Anspruch 11 oder Anspruch 12, ferner umfassend automatisches Anpassen von Betriebsparametern der Bahnlängsschneidemaschine in Reaktion auf eine Rückinformation, die von einem oder mehreren der Vielzahl von Elektromotoren (310, 320, 330) bereitgestellt wird, wobei das automatische Anpassen von Betriebsparametern optional ein Anpassen einer Spannung in einer Bahn umfasst, die durch die Bahnlängsschneidemaschine läuft.

14. Verfahren nach Anspruch 13, ferner umfassend automatisches Anpassen der auf den Messerträger (120) ausgeübten Kraft durch Steuern der Bewegung des Messerträgers relativ zu dem Rahmen (300), wobei die Kraft optional durch einen an dem Messerträger angebrachten Dehnungsmesser detektiert wird.

## Revendications

1. Porte-couteau de machine à refendre le tissu (100) configuré de sorte à être monté sur un rail pour un mouvement linéaire du porte-couteau le long d'un premier axe, le porte-couteau comprenant :
un cadre (300) ;
un support de couteau (120) relié au cadre par un mécanisme de déplacement (340, 350, 360) ; et
une pluralité de moteurs électriques (310, 320, 330) reliés au mécanisme de déplacement,
dans lequel le support de couteau est mobile par rapport au cadre selon trois degrés de liberté indépendants de par le fonctionnement du mécanisme de déplacement dû à l'actionnement d'un moteur électrique respectif de la pluralité de moteurs électriques,
et dans lequel le mécanisme de déplacement (340, 350, 360) permet la rotation du support de couteau (120) par rapport au cadre (300) autour d'un second axe orthogonal au premier axe par l'actionnement d'un second moteur électrique (320) de la pluralité de moteurs électriques.

2. Porte-couteau (100) selon la revendication 1, dans lequel le mécanisme de déplacement (340, 350, 360) permet un mouvement linéaire du support de couteau (120) par rapport au cadre (300) le long d'un second axe sensiblement orthogonal au premier axe par l'actionnement d'un premier moteur électrique (310) de la pluralité de moteurs électriques, le mécanisme de déplacement comprenant en option une vis (340) définissant le second axe, dans lequel la rotation de la vis par l'actionnement du premier moteur entraîne le mouvement linéaire du support de couteau par rapport au cadre.

3. Porte-couteau (100) selon la revendication 1, dans lequel le mécanisme de déplacement comprend une came rotative (610), dans lequel la rotation de la came par l'actionnement du deuxième moteur entraîne la rotation du support de couteau par rapport au cadre.

4. Porte-couteau (100) selon la revendication 3, dans lequel le mécanisme de déplacement (340, 350, 360) permet le mouvement linéaire du support de couteau (120) par rapport au cadre (300) le long du second axe par l'actionnement d'un premier moteur électrique (310) de la pluralité de moteurs électriques.

5. Porte-couteau (100) selon l'une quelconque des revendications précédentes, dans lequel le mécanisme de déplacement (340, 350, 360) permet le mouvement linéaire du support de couteau (120) par rapport au cadre (300) dans une direction sensiblement parallèle au premier axe par l'actionnement d'un troisième moteur électrique (330) de la pluralité de moteurs électriques, le mécanisme de déplacement comprenant en option une paire de liens rotatifs (730, 740) reliés au troisième moteur électrique (330) de la pluralité de moteurs électriques de sorte que l'actionnement du troisième moteur entraîne le déplacement du support de couteau le long de la direction sensiblement parallèle au premier axe par la rotation synchronisée de la paire de liens rotatifs, la paire de liens étant agencée en option en une formation sensiblement parallèle.

6. Porte-couteau (100) selon l'une quelconque des revendications précédentes, comprenant un quatrième moteur électrique de la pluralité de moteurs électriques configuré pour entraîner le porte-couteau le long du premier axe.

7. Porte-couteau (100) selon la revendication 1, dans lequel la pluralité de moteurs électriques (310, 320, 330) sont des moteurs électriques à servocommande.

8. Porte-couteau (100) selon l'une quelconque des revendications précédentes comprenant un boîtier extérieur (110) renfermant le cadre, le mécanisme de déplacement et la pluralité de moteurs électriques, le boîtier extérieur comprenant en option un écran (130) configuré pour indiquer les paramètres opérationnels du porte-couteau.

9. Porte-couteau (100) selon la revendication 1, dans lequel le support de couteau (120) comprend un capteur configuré pour détecter la rotation d'une lame de couteau montée de manière rotative sur le support de couteau pour déterminer une vitesse de rotation de la lame de couteau, le capteur comprenant en option un capteur de proximité magnétique monté sur le support de couteau et un aimant monté sur la lame de couteau.

10. Porte-couteau (100) selon la revendication 1, comprenant un extensomètre monté sur le support de couteau et configuré pour détecter une force latérale exercée sur le support de couteau.

11. Procédé de fonctionnement d'une machine à refendre le tissu comprenant :
la commande électrique d'une pluralité de moteurs électriques (310, 320, 330) dans chaque porte-couteau d'une pluralité de porte-couteaux (100), les porte-couteaux étant fixés à un rail de montage de la machine à refendre le tissu pour un mouvement linéaire le long d'un premier axe,
dans lequel chaque porte-couteau (100) comprend un cadre (300) et un support de couteau (120) relié au cadre par un mécanisme de déplacement (340, 350, 360), **caractérisé par le fait que** la pluralité de moteurs électriques sont reliés au mécanisme de déplacement pour déplacer le support de couteau par rapport au cadre selon trois degrés de liberté indépendants de par le fonctionnement du mécanisme de déplacement par la commande électrique de la pluralité de moteurs électriques,
dans lequel le mécanisme de déplacement (340, 350, 360) tourne le support de couteau (120) par rapport au cadre (300) autour d'un second axe orthogonal au premier axe par l'actionnement d'un deuxième moteur électrique (320) de la pluralité de moteurs électriques.

12. Procédé selon la revendication 11, comprenant la détection d'une force exercée sur un support de couteau par l'un ou plusieurs moteurs électriques de la pluralité de moteurs électriques (310, 320, 330).

13. Procédé selon la revendication 11 ou 12 comprenant l'ajustement automatique des paramètres opérationnels de la machine à refendre le tissu en réponse au retour fourni par l'un ou plusieurs moteurs électriques de la pluralité de moteurs électriques (310, 320, 330), dans lequel l'ajustement automatique des paramètres opérationnels comprend en option l'ajustement d'une tension dans un tissu traversant la machine à refendre le tissu.

14. Procédé selon la revendication 13, comprenant l'ajustement automatique de la force exercée sur le support de couteau (120) par la commande du mouvement du support de couteau par rapport au cadre (300), dans lequel la force est détectée en option par un extensomètre monté sur le support de couteau.
